# EUROPEAN PATENT SPECIFICATION

(11) **EP 3 819 568 B1**
(45) Date of publication and mention of the grant of the patent: **21.05.2025**
(21) Application number: 19207120.7
(22) Date of filing: 05.11.2019
(51) Int. Cl.: F25D 11/02

(54) **REFRIGERATING APPLIANCE**
KÜHLSCHRANK
APPAREIL DE RÉFRIGÉRATION

(43) Date of publication of application: 12.05.2021
(73) Proprietor: ELECTROLUX APPLIANCES AKTIEBOLAG, 105 45 Stockholm (SE)
(72) Inventor: LAZZARINI, Paolo, 33080 Porcia (IT); PELLEGRINI, Tommaso, 33080 Porcia (IT); PIN, Gilberto, 33080 Porcia (IT)
(74) Representative: Electrolux Group Patents

(56) References cited:
- EP-A1- 1 243 880
- EP-A2- 1 176 346
- EP-A2- 2 015 009
- JP-A- 2000 146 398
- US-A1- 2007 144 190
- US-B1- 6 438 978

## Description

### Field of the invention

The present invention generally relates to a refrigerating appliance. More particularly, the present invention relates to a refrigerating appliance with an improved temperature control.

### Background of the invention

Conventional refrigerating appliances comprise one or more storage compartments, which allow refrigerating food and beverage articles through a heat pump refrigeration circuit exploiting the evaporation of a refrigerant fluid that flows in one or more evaporators. The refrigeration circuit also comprises, among other elements, a compressor configured to cause the refrigerant fluid to circulate in the refrigeration circuit, and to increase the pressure, and therefore the temperature, of the refrigerant fluid itself.

As it is well known to those skilled in the art, temperature control inside the storage compartments can be obtained by properly control the flow rate of the compressor, for example by adjusting the speed or the duty cycle thereof.

Refrigerating appliances comprising more storage compartments intended to be at reciprocally different temperatures (also referred to as combined refrigerating appliances) are very common. For example, combined refrigerating appliances for domestic use typically comprise two storage compartments, and namely a first, lower-temperature, storage compartment (commonly referred to as freezer compartment) adapted to be at low temperatures (*e*.*g*., in the range [-27, -18] °C) and a second, higher-temperature, storage compartment (commonly referred to as fresh-food compartment) adapted to be at higher temperatures (*e*.*g*., in the range [3, 7] °C).

Two main approaches are known for implementing combined refrigerating appliances comprising a lower-temperature storage compartment and a higher-temperature storage compartment.

According to a first approach, the refrigerating circuit is provided with a single evaporator, which is used to refrigerate both the two storage compartments. According to this approach, cold refrigerating air generated at the (single) evaporator is first fed to the lower-temperature storage compartment, where it warms up by thermal exchange with food and beverage articles, and then to the higher-temperature storage compartment.

According to a second approach, the refrigerating circuit is provided with two evaporators, and namely a first evaporator associated to the lower-temperature storage compartment and a second evaporator associated to the higher-temperature storage compartment. According to this approach, the cold refrigerating air generated at an evaporator associated to a storage compartment is (mainly) employed for refrigerating said storage compartment.

Different architectures to implement a refrigeration circuit comprising two evaporators are known in the art.

One architecture provides that the refrigeration circuit has the two evaporators that are fluidly connected in series, whereby the refrigerant fluid firstly flows through a first evaporator and then flows through a second evaporator. Compared to other architectures, a refrigeration circuit in which the evaporators are connected in series is easier to be implemented, requiring less hydraulic system components.

One known refrigerator is disclosed in JP2000146398, wherein a refrigeration circuit can comprise a compressor, condenser, first and second evaporators and a valve connected in series. By use of the valve the first evaporator can be bypassed. Control of the valve and compressor is based on temperature differences between measured and set temperature in respective compartment.

Another known refrigerator is disclosed in US2007/0144190, wherein a refrigeration circuit can comprise a compressor, condenser, first and second evaporators and a valve connected in series. The compressor includes additional valves. By use of the valves the first or second evaporator can be bypassed. Control of the valves and the compressor is based on temperature differences between measured and set temperature for respective compartment.

Yet another known refrigerator is disclosed in US6,438,978, wherein a refrigeration circuit can comprise a compressor, condenser and first and second evaporators, all serially connected. The compressor is activated based on temperature in either compartment (freezer or fresh food) exceeding a set temperature.

### Summary of invention

The Applicant has realized that the known solutions for implementing combined refrigerating appliances with a refrigeration circuit comprising two evaporators fluidly connected in series to each other and each associated to a different storage compartment are not particularly satisfactory because affected by temperature control drawbacks.

In a refrigeration circuit comprising two evaporators fluidly connected in series to each other and configured to be crossed by the same refrigerant fluid, independently setting and controlling the temperatures in each storage compartment in an efficient way by adjusting the flow rate of the compressor is not an easy task. Indeed, since the same refrigerator fluid flows in both the two evaporators, adjusting the flow rate of the compressor causes a variation in the pressure and temperature of the refrigerant fluid that causes in turn a temperature variation in both the two storage compartments. This may produce undesired undercooling in one of the two storage compartments.

In view of the above, it is an object of the present invention to provide a refrigerating appliance that is not affected by the abovementioned drawbacks.

The Applicant has devised a solution that allows to control in a better and faster way the temperature of each storage compartment, improving the refrigeration efficiency of the refrigeration circuit by managing the compressor of the refrigerant circuit in a way that takes into account the actual temperatures of the storage compartments.

One or more aspects of the present invention are set out in the independent claims, with advantageous features of the same invention that are indicated in the dependent claims.

An aspect of the present invention relates to a refrigerating appliance.

A refrigerating appliance according to the invention is defined in claim 1. Further embodiments are defined in the dependent claims. A method for operating a refrigerating appliance according to the invention is defined in claim 14.

According to an embodiment of the present invention, said first difference has a lower weight compared to a weight of said second difference in said weighted average.

According to an embodiment of the present invention, said first difference has a higher weight compared to a weight of said second difference in said weighted average.

According to an embodiment of the present invention, at least one evaporator between the first evaporator and the second evaporator is associated with a corresponding fan configured to promote heat exchange between said at least one evaporator and the storage compartment associated to said at least one evaporator.

According to an embodiment of the present invention, the control unit is configured to set a flow rate of said fan according to a difference between:
- said sensed temperature of the storage compartment associated with the evaporator which is in turn associated with said fan, and
- said target temperature of said storage compartment associated with the evaporator which is in turn associated with said fan.

In this way, the rotation speed of the fan, and therefore the thermal exchange degree between the evaporator associated to said fan and the volume of air inside the storage compartment associated with the evaporator, is advantageously set by taking into consideration the actual temperature of said storage compartment, and particularly, its drift with respect to the storage compartment target temperature.

According to an embodiment of the present invention the first evaporator is associated with a corresponding first fan configured to promote heat exchange between said first evaporator and the first storage compartment.

According to an embodiment of the present invention, the second evaporator is associated with a corresponding second fan configured to promote heat exchange between said second evaporator and the second storage compartment.

According to an embodiment of the present invention, the control unit is configured to set a flow rate of said first fan according to said first difference.

According to an embodiment of the present invention, the control unit is configured to set a flow rate of said second fan according to said second difference.

In this way, occurrences of undercooling are reduced because the flow rate of the compressor is advantageously set to compensate a global temperature drift relating both to the temperature drift in the first storage compartment and to the temperature drift in the second storage compartment, while the flow rate of the first fan is advantageously set to compensate a first local temperature drift relating to the temperature drift in the first storage compartment, and the flow rate of the second fan is advantageously set to compensate a second local temperature drift relating to the temperature drift in the second storage compartment.

According to an embodiment of the present invention, the control unit is configured to:
- when the average of said first difference and said second difference is higher than zero, increase the flow rate of the compressor, and
- when the average of said first difference and said second difference is lower than zero, decrease the flow rate of the compressor.

According to an embodiment of the present invention, the control unit is configured to:
- when the first difference is higher than zero, increase the flow rate of the first fan;
- when the first difference is lower than zero, decrease the flow rate of the first fan,
   and/or:
   - when the second difference is higher than zero, increase the flow rate of the second fan, and
   - when the second difference is lower than zero, decrease the flow rate of the second fan.

According to an embodiment of the present invention, the first evaporator is associated with a corresponding first fan configured to promote heat exchange between said first evaporator and the first storage compartment, and no fan is associated with the second evaporator.

According to an embodiment of the present invention, the control unit is configured to set the flow rate of the compressor according to a weighted average of said first difference and said second difference, with said first difference that has a lower weight compared to a weight of said second difference.

In this way, occurrences of undercooling are reduced even with a single fan, since the temperature variation caused by the variation of the flow rate of the compressor is advantageosuly calibrated to have a higher effect in the storage compartment that does not have any fan compared to the other storage compartment having the fan .

According to an embodiment of the present invention, the control unit is configured to set a flow rate of said first fan according to said first difference.

According to an embodiment of the present invention, the control unit is configured to:
- when the weighted average of said first difference and said second difference is higher than zero, increase the flow rate of the compressor, and
- when the weighted average of said first difference and said second difference is lower than zero, decrease the flow rate of the compressor.

According to an embodiment of the present invention, the control unit is configured to:
- when the first difference is higher than zero, increase the flow rate of the first fan;
- when the first difference is lower than zero, decrease the flow rate of the first fan.

According to an embodiment of the present invention, the first storage compartment is a freezer storage compartment, and the second storage compartment is a fresh food storage compartment.

According to an embodiment of the present invention, the compressor is a variable speed compressor, the control unit being configured to set the flow rate of the compressor by setting the speed of the compressor.

According to an embodiment of the present invention, the control unit is configured to set the flow rate of the compressor by setting the duty cycle of the compressor.

According to an embodiment of the present invention, the control unit is configured to set the flow rate of the first and/or second fan by setting the rotation speed of the first and/or second fan.

According to an embodiment of the present invention, the control unit is configured to set the flow rate of the first and/or second fan by setting the duty cycle of the first and/or second fan.

According to an embodiment of the present invention, said first difference has a lower weight compared to a weight of said second difference in said weighted average.

According to an embodiment of the present invention, said first difference has a higher weight compared to a weight of said second difference in said weighted average.

According to an embodiment of the present invention, at least one evaporator between the first evaporator and the second evaporator is associated with a corresponding fan configured to promote heat exchange between said at least one evaporator and the storage compartment associated to said at least one evaporator, the method comprising setting a flow rate of said fan according to a difference between:
- said sensed temperature of the storage compartment associated with the evaporator which is in turn associated with said fan, and
- said target temperature of said storage compartment associated with the evaporator which is in turn associated with said fan.

### Brief description of the annexed drawings

These and other features and advantages of the present invention will be made apparent by the following description of some exemplary and non-limitative embodiments thereof; for its better intelligibility, the following description should be read making reference to the attached drawings, wherein:
**Figure 1** schematically illustrates a refrigerating appliance according to a first embodiment of the invention;
**Figure 2** schematically illustrates a refrigerating appliance according to a second embodiment of the invention, and
**Figure** 3 is a flow chart of operations carried out by a control unit of the refrigerating appliance of **Figure 1** or **Figure 2** according to an embodiment of the present invention.

### Detailed description of preferred embodiments of the invention

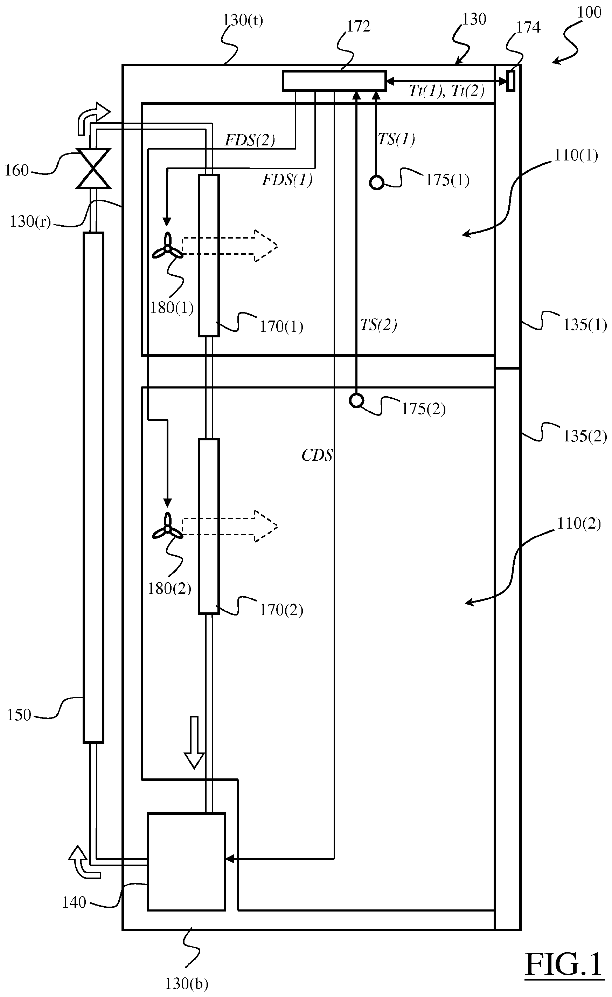

With reference to the drawings, **Figure 1** schematically illustrates a (not-in-scale) cross-sectional side view of a refrigerating appliance **100** according to a first embodiment of the invention.

The refrigerating appliance **100** comprises a number of well known electronic, mechanical and/or electro-mechanical components - however, for the sake of description ease and conciseness, only those being relevant for understanding the invention will be introduced and discussed in the following.

According to an embodiment of the present invention, the refrigerating appliance **100** is a combined-type refrigerating appliance, comprising a first storage compartment **110(1)** and a second storage compartment **110(2)** where food and beverage articles can be stored and preserved by refrigeration at different temperatures.

In the considered example, the first storage compartment **110(1)** is a storage compartment adapted to operate at lower temperature than the second storage compartment **110(2).**

For example, the first storage compartment **110(1)** is a lower-temperature storage compartment, such as a freezer compartment, adapted to be at temperatures below 0°C (*e.g.,* in the range [-27, -18] °C). The second storage compartment **110(2)** is a higher-temperature storage compartment, such as a fresh-food compartment, adapted to be at temperatures above 0°C (*e.g.,* in the range [3, 7] °C). These temperature ranges have to be intended only as non limitative examples, since the concepts of the present invention can be directly applied to any range of temperatures, and also if the first and second storage compartments **110(1), 110(2)** are both adapted to operate at temperatures below 0°C or are both adapted to operate at temperatures above 0°C, provided that the first storage compartment **110(1)** is adapted to operate at different, preferably lower, temperatures than the second storage compartment **110(2).**

In the illustrated example, the first storage compartment **110(1)** is positioned above the second storage compartment **110(2),** however similar considerations apply in case the positions of the two compartments **110(1), 110(2)** are swapped.

Shelves and other structures for supporting and storing food and beverage articles (not illustrated in the figures) may be provided within both the first and second storage compartments **110(1), 110(2).**

According to an embodiment of the present invention, the refrigerating appliance **100** comprises a substantially parallepiped-shaped cabinet **130,** having a top panel **130(t),** a rear panel **130(r),** a bottom panel **130(b)** and side panels (not visible). Naturally, similar considerations apply in case the cabinet **130** has a different shape and/or structure.

According to a preferred embodiment of the present invention, a first door **135(1)** and a second door **135(2)** are hingedly mounted to a front portion of the cabinet **130** to provide selective access to the first storage compartment **110(1)** and to the second storage compartment **110(2),** respectively.

According to an embodiment of the present invention, the refrigerating appliance **100** is equipped with a refrigeration circuit for circulating a refrigeration fluid (briefly referred to as "refrigerant").

According to an embodiment of the present invention, the refrigeration circuit comprises a compressor unit **140,** a condenser unit **150,** a fluid expansion unit **160,** a first evaporator unit **170(1)** associated to the first storage compartment **110(1),** and a second evaporator unit **170(2)** associated to the second storage compartment **110(2).**

According to an embodiment of the present invention, the two evaporator units **170(1)** and **170(2)** are fluidly connected in series to each other in the refrigeration circuit, with the first evaporator unit **170(1)** that is upstream the second evaporator unit **170(2)** along the flow direction of the refrigerant in said refrigeration circuit (illustrated in the figures through bold arrows).

As it is well known to those skilled in the art, the compressor unit **140** carries out the double function of compressing the refrigerant and causing the circulation of refrigerant itself in the refrigeration circuit - so that the refrigerant flows, in sequence, through the condenser unit **150,** the fluid expansion unit **160,** the first evaporator unit **170(1),** and the second evaporator unit **170(2),** before reaching again the compressor unit **140.**

According to a preferred embodiment of the present invention, the compressor unit **140** is located on a bottom portion of the refrigerating appliance **100,** preferably close to the rear panel **130(r)** of the casing **130.**

According to a preferred embodiment of the present invention, the condenser unit **150** is provided on the rear portion of the refrigerating appliance **100,** such as at the rear panel **130(r)** of the cabinet **130.**

According to an embodiment of the present invention, the first evaporator unit **170(1)** is located at the first storage compartment **110(1),** for example close to the rear panel **130(r),** and the second evaporator unit **170(2)** is located at the second storage compartment **110(2),** for example close to the rear panel **130(r).**

Naturally, the concepts of the present invention can be directly applied in case one or more among the compressor unit **140,** the condenser unit **150,** the fluid expansion unit **160,** the first evaporator unit **170(1),** and the second evaporator unit **170(2)** are located in different positions of the refrigerating appliance **100,** provided that the first evaporator unit **170(1)** is arranged in such a way to be able of generating refrigerating air in the first storage compartment **110(1)** and the second evaporator unit **170(2)** is arranged in such a way to be able of generating refrigerating air in the second storage compartment **110(2).**

The compressor unit **140** has an input port fluidly coupled with an output port of the second evaporator unit **170(2)** for receiving refrigerant - in the vapor phase- at a relatively low temperature and at a relatively low pressure.

The compressor unit **140** has an output port fluidly coupled with an input port of the condenser unit **150.**

The compressor unit **140** is configured to compress the refrigerant received by the second evaporator unit **170(2)** so as to increase the pressure and temperature thereof, and to provide the compressed refrigerant to the condenser unit **150.**

The compressed refrigerant, still in the vapor phase, flows through the condenser unit **150,** wherein it condenses to liquid phase by heat exchange with ambient air.

The condenser unit **150** has an output port fluidly coupled with the fluid expansion unit **160** for providing the refrigerant, now in form of a high pressure liquid, to the latter unit.

The fluid expansion unit **160,** for example an expansion valve or a capillary tube, is configured to reduce the pressure, and the temperature, of the refrigerant.

The refrigerant outputted by the fluid expansion unit **160** - which is a low pressure, low temperature fluid in which liquid and vapor phase coexist - is fed to an input port of the first evaporator unit **170(1).**

As the refrigerant flows through the first evaporator unit **170(1),** part of the liquid fraction of the refrigerant turns from liquid into vapor through evaporation, causing air inside the first storage compartment **110(1)** to cool down.

The refrigerant exits the first evaporator unit **170(1)** through an output port thereof, that is fluidly coupled with an input port of the second evaporator unit **170(2).**

As the refrigerant flows through the second evaporator unit **170(2),** the remaining liquid fraction of the refrigerant turns from liquid into vapor through evaporation, causing air inside the second storage compartment **110(2)** to cool down. Once the liquid fraction of the refrigerant is entirely turned into vapor, the temperature of the refrigerant starts to rise up.

According to an embodiment of the present invention, the first evaporator unit **170(1)** is larger than the second evaporator unit **170(2),** so that the temperature in the first storage compartment **110(1)** is lower than the temperature in the second storage compartment **110(2).**

The refrigerant - now in vapor phase - outputted from the output port of the second evaporator unit **170(2)** is then fed again to the compressor unit **140.**

According to an embodiment of the present invention, the compressor unit **140** is capable of setting the volume of refrigerant delivered per time unit (also referred to as "flow rate" or "throughput") under the control of a control unit **172** of the refrigerating appliance **100.** For example, the control unit **172** may be configured to generate and send to the compressor a compressor driving signal *CDS* indicative of a desired flow rate.

As it is well known to those skilled in the art:
- if the flow rate of the compressor unit **140** is increased, the cooling effect of the first and second evaporator units **170(1), 170(2)** is increased, causing a reduction of the temperatures of the corresponding storage compartments **110(1), 110(2)** if other operative parameters are held constant;
- if the flow rate of the compressor unit **140** is decreased, the cooling effect of the first and second evaporator units **170(1), 170(2)** is reduced, causing an increasing of the temperatures of the corresponding storage compartments **110(1), 110(2)** if other operative parameters are held constant.

According to an embodiment of the present invention, the control unit **172** is configured to set the flow rate of the compressor unit **140** by setting the speed thereof, for example to a value proportional to the compressor driving signal *CDS.*

According to an embodiment of the present invention, the control unit **172** is configured to set the flow rate of the compressor unit **140** by setting the duty cycle thereof, for example to a value proportional to the compressor driving signal *CDS.*

As it is well known to those skilled in the art, the higher the speed or the duty cycle of the compressor unit **140,** the higher the flow rate. Conversely, the lower the speed or the duty cycle of the compressor unit **140,** the lower the flow rate.

According to an embodiment of the present invention, the refrigerating appliance **100** comprises a user interface **174** through which a user may input commands to the control unit **172.** For example, as will be described in detail in the following of the present description, the user interface **174** can be advantageously exploited for setting a desired temperature for the first storage compartment **110(1),** hereinafter referred to as first target temperature *Tt(1),* and a desired temperature for the second storage compartment **110(2),** hereinafter referred to as second target temperature *Tt(2).*

Different kind of user interfaces **174** can be provided, from simple rotary knobs inside the storage compartments, to more advanced user interfaces provided with touch screen, buttons, and/or visual display located on one or more of the doors and/or on cabinet. Still more advanced user interfaces **174** can be considered, comprising a wireless communication unit adapted to receive commands and provide data from/to a personal user device, such as a smartphone.

According to the present invention, temperature sensors are provided in both the first storage compartment **110(1)** and the second storage compartment **110(2)** for sensing the temperature thereinside.

According to the present invention, a first temperature sensor **175(1)** is located inside the first storage compartment **110(1)** and a second temperature sensor **175(2)** is located inside the second storage compartment **110(2).**

According to the present invention, the first and second temperature sensors **175(1), 175(2)** are connected to the control unit **172,** to provide the sensed temperatures to the latter. The first temperature sensor **175(1)** is configured to provide a first sensed temperature *Ts(1)* value indicative of the temperature inside the first storage compartment **110(1)** to the control unit **172,** and the second temperature sensor **175(2)** is configured to provide a second sensed temperature *Ts(2)* value indicative of the temperature inside the second storage compartment **110(2)** to the control unit **172.**

According to the present invention, the control unit **172** is configured to set a flow rate of the compressor unit **140** according to a weighted average of both:
- a first difference *D(1) = Ts(1) - Tt(1)* between the first sensed temperature *Ts(1)* and the first target temperature *Tt(1),* and
- a second difference *D(2) = Ts(2) - Tt(2)* between the second sensed temperature *Ts(2)* and the second target temperature *Tt(2).*

In other words, according to the present invention, the flow rate of the compressor unit **140,** and therefore the cooling effect of the first and second evaporator units **170(1), 170(2),** is set by taking into considerations the actual temperatures of both the first and second storage compartments **110(1), 110(2).**

According to these embodiments of the invention, the flow rate of the compressor unit **140** is set to a value that is a tradeoff between a value capable of compensating for drifts between the actual temperature in the first storage compartment **110(1)** and the first target temperature *Tt(1),* and at the same time capable of compensating for drifts between the actual temperature in the second storage compartment **110(2)** and the first target temperature *Tt(2).*

For example, according to an embodiment of the present invention, the control unit **172** is configured to set a flow rate of the compressor unit **140** to a selected value in an allowable flow rate range - spanning from a minimum flow rate value *FRmin* to a maximum flow rate value *FRmax -* based on the value of such average A. For example, negative values of the average A may correspond to low flow rate values, closer to the minimum flow rate value *FRmin,* while positive values of the average A may correspond to high flow rate values, closer to the maximum flow rate value *FRmax.*

According to the preferable embodiment of the invention illustrated in **Figure 1****,** the first and second evaporator units **170(1), 170(2)** are each one associated with a corresponding fan configured to promote heat exchange between the evaporator itself and the storage compartment associated to the evaporator.

According to a preferred embodiment of the present invention, the refrigerating appliance **100** comprises a first fan **180(1)** associated to the first evaporator unit **170(1).** Preferably, the first fan **180(1)** is configured to promote heat exchange between the evaporator unit **170(1)** and the first storage compartment **110(1).** For example, the first fan **180(1)** may be provided at the first storage compartment **110(1),** such as for example between the evaporator unit **170(1)** and a portion of the first storage compartment **110(1)** close to the rear panel **130(r).**

According to a preferred embodiment of the present invention, the refrigerating appliance **100** comprises a second fan **180(2)** associated to the second evaporator unit **170(2).** Preferably, the second fan **180(2)** is configured to promote heat exchange between the evaporator unit **170(2)** and the second storage compartment **110(2).** For example, the second fan **180(2)** may be provided at the second storage compartment **110(2),** such as for example between the evaporator unit **170(2)** and a portion of the second storage compartment **110(2)** close to the rear panel **130(r).**

According to a preferred embodiment of the present invention, the control unit **172** is configured to set the volume of air moved per time unit ("flow rate") of the first fan **180(1).** For example, the control unit **172** may be configured to generate and send to the first fan **180(1)** a first fan driving signal *FDS(1)* indicative of a desired flow rate of the first fan **180(1).**

According to a preferred embodiment of the present invention, the control unit **172** is configured to set the volume of air moved per time unit ("flow rate") of the second fan **180(2).** For example, the control unit **172** may be configured to generate and send to the second fan **180(2)** a second fan driving signal *FDS(2)* indicative of a desired flow rate of the second fan **180(2).**

According to an embodiment of the present invention, the control unit **172** is configured to set the flow rate of the first fan **180(1)** by setting the rotation speed thereof, for example to a value proportional to the first fan driving signal *FDS(1).* According to an embodiment of the present invention, the control unit **172** is configured to set the flow rate of the first fan **180(1)** by setting the duty cycle thereof, for example to a value proportional to the first fan driving signal *FDS(1).*

Similarly, according to an embodiment of the present invention, the control unit **172** is configured to set the flow rate of the second fan **180(2)** by setting the rotation speed thereof, for example to a value proportional to the second fan driving signal *FDS(2).* According to an embodiment of the present invention, the control unit **172** is configured to set the flow rate of the second fan **180(2)** by setting the duty cycle thereof, for example to a value proportional to the second fan driving signal *FDS(2).*

As it is well known to those skilled in the art:
- if the flow rate of the first fan **180(1)** is increased, the thermal exchange between the first evaporator **170(1)** and the volume of air inside the first storage compartment **110(1)** is improved, and therefore, if other operative parameters are held constant, the temperature inside the first storage compartment **110(1)** is decreased;
- if the flow rate of the first fan **180(1)** is decreased, the heat exchange between the first evaporator **170(1)** and the volume of air inside the first storage compartment **110(1)** is reduced, and therefore, if other operative parameters are held constant, the temperature inside the first storage compartment **110(1)** is increased;
- if the flow rate of the second fan **180(2)** is increased, the heat exchange between the second evaporator **170(2)** and the volume of air inside the second storage compartment **110(2)** is improved, and therefore, if other operative parameters are held constant, the temperature inside the second storage compartment **110(2)** is decreased;
- if the flow rate of the second fan **180(2)** is decreased, the heat exchange between the second evaporator **170(2)** and the volume of air inside the second storage compartment **110(2)** is reduced, and therefore, if other operative parameters are held constant, the temperature inside the second storage compartment **110(2)** is increased.

According to a preferred embodiment of the present invention, the control unit **172** is configured to set the flow rate of the first fan **180(1)** to a value proportional to the first fan driving signal *FDS(1).*

According to a preferred embodiment of the present invention, the control unit **172** is configured to set the flow rate of the second fan **180(2)** to a value proportional to the second fan driving signal *FDS(2).*

According to a preferred embodiment of the present invention, the control unit **172** is configured to set the flow rate of the first fan **180(1)** according to the first difference *D(1), i.e.,* according to the difference between the first sensed temperature *Ts(1)* and the first target temperature *Tt(1).*

According to a preferred embodiment of the present invention, the control unit **172** is configured to set the flow rate of the second fan **180(2)** according to the second difference *D(2), i.e.,* according to the difference between the second sensed temperature *Ts(2)* and the second target temperature *Tt(2).*

In other words, according to embodiments of the present invention, the flow rate of the first fan **180(1),** and therefore the heat exchange degree between the first evaporator **170(1)** and the volume of air inside the first storage compartment **110(1),** is set by taking into consideration the actual temperature of the first storage compartment **110(1)** (and particularly, its drift with respect to the first target temperature *Tt(1)*)*.* Similarly, the flow rate of the second fan **180(2),** and therefore the heat exchange degree between the second evaporator **170(2)** and the volume of air inside the second storage compartment **110(2),** is set by taking into consideration the actual temperature of the second storage compartment **110(2)** (and particularly, its drift with respect to the second target temperature *Tt(2)*)*.*

According to a preferred embodiment of the present invention, the control unit **172** is configured to set the flow rate of the first fan **180(1)** to a selected value in an allowable first fan flow rate range - spanning from a minimum first fan flow rate *FS(1)min* to a maximum first fan flow rate *FS(1)max* - based on the value of the first difference *D(1) = Ts(1) - Tt(1)* between the first sensed temperature *Ts(1)* and the first target temperature *Tt(1).* For example, negative values of the first difference *D(1)* may correspond to low first fan flow rate values, closer to the minimum first fan flow rate *FS(1)min,* while positive values of the first difference *D(1)* may correspond to high first fan flow rate values, closer to the maximum first fan flow rate *FS(1)max.*

According to a preferred embodiment of the present invention, the control unit **172** is configured to set the flow rate of the second fan **180(2)** to a selected value in an allowable second fan flow rate range - spanning from a minimum second fan flow rate *FS(2)min* to a maximum second fan flow rate *FS(2)max* - based on the value of the second difference *D(2) = Ts(2) - Tt(2)* between the second sensed temperature *Ts(2)* and the second target temperature *Tt(2).* For example, negative values of the second difference *D(2)* may correspond to low second fan flow rate values, closer to the minimum second fan flow rate *FS(2)min,* while positive values of the second difference *D(2)* may correspond to high second fan flow rate values, closer to the maximum second fan flow rate *FS(2)max.*

According to this embodiment of the invention, while the flow rate of the compressor unit **140** is set to compensate a "global temperature drift" relating both to the temperature drift in the first storage compartment **110(1)** (with respect to the first target temperature *Tt(1)*) and to the temperature drift in the second storage compartment **110(2)** (with respect to the second target temperature *Tt(2)*)*,* the flow rate of the first fan **180(1)** is set to compensate a "first local temperature drift" relating to the temperature drift in the first storage compartment **110(1)** (with respect to the first target temperature *Tt(1)*)*,* and the flow rate of the second fan **180(2)** is set to compensate a "second local temperature drift" relating to the temperature drift in the second storage compartment **110(2)** (with respect to the second target temperature *Tt(2)*)*.*

The temperature control according to this embodiment of the invention is a two-tier temperature control, with a first tier corresponding to the temperature control obtained by controlling the flow rate of the compressor unit **140,** and a second tier corresponding to the temperature control obtained by controlling the rotation speed of the first and second fans **180(1), 180(2).**

This peculiar control scheme advantageously avoids situations in which one of the storage compartment is subjected to undercooling when its actual temperature is close to its respective target temperature (and therefore it does need to be adjusted), while the other storage compartment has its temperature that is sensibly higher than its respective target temperature (and therefore it has to be sensibly decreased). In this case, the flow rate of the compressor unit **140** is increased since the average A is higher than zero (causing thus a global reduction in the temperatures of both the storage compartment), but the flow rate of the fan associated to the storage compartment that does not require change in temperature is advantageously reduced to counterbalance the undesired (and unnecessary) temperature reduction caused by the flow rate increasing of the compressor.

According to a preferred embodiment of the present invention, the control unit **172** is configured to increase the flow rate of the compressor unit **140** when the average A of the first difference *D(1) = Ts(1) - Tt(1)* and the second difference *D(2) = Ts(2) - Tt(2)* is higher than zero.

According to a preferred embodiment of the present invention, the control unit **172** is configured to decrease the flow rate of the compressor unit **140** when the average A of the first difference *D(1) = Ts(1) - Tt(1)* and the second difference *D(2)* = *Ts(2) - Tt(2)* is lower than zero.

According to a preferred embodiment of the present invention, the control unit **172** is configured to increase the rotation speed of the first fan **180(1)** when the first difference *D(1) = Ts(1) - Tt(1)* is higher than zero.

According to a preferred embodiment of the present invention, the control unit **172** is configured to decrease the flow rate of the first fan **180(1)** when the first difference *D(1)* = *Ts(1) - Tt(1)* is lower than zero.

According to a preferred embodiment of the present invention, the control unit **172** is configured to increase the flow rate of the second fan **180(2)** when the second difference *D(2) = Ts(2) - Tt(2)* is higher than zero.

According a preferred an embodiment of the present invention, the control unit **172** is configured to decrease the flow rate of the second fan **180(2)** when the second difference *D(2) = Ts(2) - Tt(2)* is lower than zero.

The embodiments of the invention described above make reference to the case illustrated in **Figure 1****,** wherein each evaporator unit **170(1), 170(2)** is associated with a respective fan **180(1), 180(2),** respectively.

However, the concepts of the present invention can be also applied to cases in which only one evaporator unit is associated with a respective fan, while the other one is not provided with any fan.

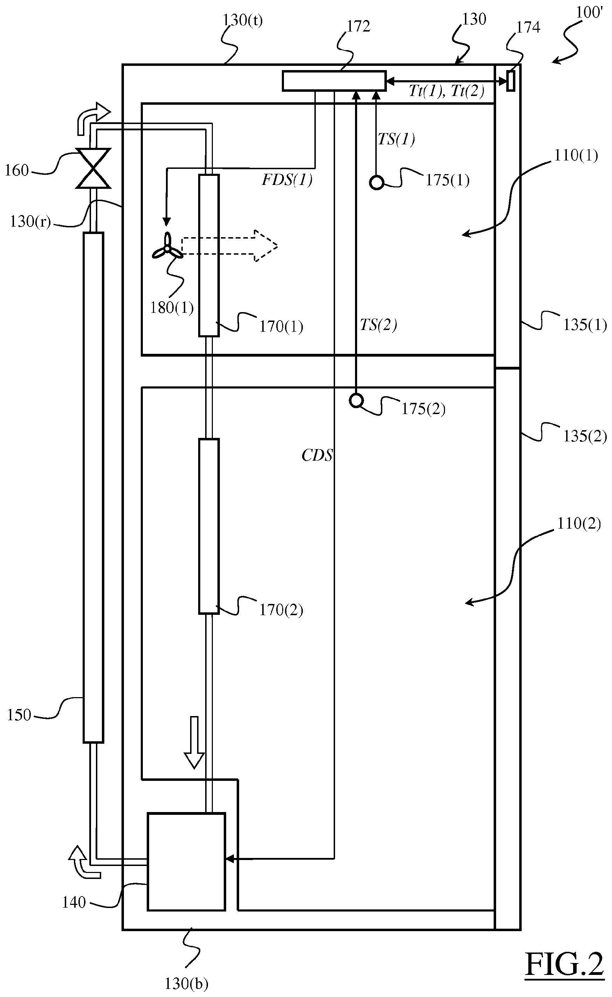

Making for example reference to the refrigerating appliance **100'** illustrated in **Figure 2** (in which elements corresponding to the ones illustrated in **Figure 1** are identified with the same references), only the first evaporator unit **170(1)** is associated with a corresponding fan **180(1).**

In this case as well, the control unit **172** may be preferably configured to set a flow rate of the compressor unit **140** according to an average A of the first difference *D(1) = Ts(1) - Tt(1)* and the second difference *D(2) = Ts(2) - Tt(2).* Moreover, the control unit **172** is configured to set the flow rate of the first fan **180(1)** according to the first difference *D(1) = Ts(1) - Tt(1).*

According to the present invention, the average A of the first difference *D(1)* and the second difference *D(2)* is a weighted average A of the first difference *D(1)* and the second difference *D(2),* with said first difference *D(1)* that has a lower weight *W(1)* compared to a weight *W(2)* of the second difference *D(2).* For example, A may be equal to a weighted arithmetic mean of *D(1)* and *D(2), i.e., (W(1)D(1)+W(2)D(2))*/*(W(1)+W(2)),* wherein the weight *W(1)* of *D(1)* is lower than the weight *W(2)* of *D(2).*

In this way, the temperature variation caused by the variation of the flow rate of the compressor unit **140** is advantageosuly calibrated to have a higher effect in the storage compartment having the evaporator unit not associated with any fan (*i.e.,* the second storage compartment **110(2))** compared to the other storage compartment having the evaporator unit that is associated with the fan (*i.e.,* the first storage compartment **110(1)),** reducing thus occurrences of undercooling of the storage compartment without fan; in other words, the compressor flow rate is set closer to the temperature requirement of the storage compartment having the evaporator unit not associated with any fan (*i.e.,* the second storage compartment **110(1)),** whereas the temperature requirement of the storage compartment having the evaporator unit that is associated with the fan (*i.e.,* the first storage compartment **110(2))** can be adjusted thorugh the fan flow rate.

According to a preferred embodiment of the present invention, the control unit **172** is configured to increase the flow rate of the compressor unit **140** when the weighted average A of the first difference *D(1) = Ts(1) - Tt(1)* and the second difference *D(2) = Ts(2) - Tt(2)* is higher than zero.

According to a preferred embodiment of the present invention, the control unit **172** is configured to decrease the flow rate of the compressor unit **140** when the weighted average A of the first difference *D(1) = Ts(1) - Tt(1)* and the second difference *D(2) = Ts(2) - Tt(2)* is lower than zero.

Like in the embodiment of the invention illustrated in **Figure 1****,** the control unit **172** is preferably configured to increase the flow rate of the first fan **180(1)** when the first difference *D(1) = Ts(1) - Tt(1)* is higher than zero.

Like in the embodiment of the invention illustrated in **Figure 1****,** the control unit **172** is preferably configured to decrease the flow rate of the first fan **180(1)** when the first difference *D(1) = Ts(1) - Tt(1)* is lower than zero.

Naturally, the concepts of the present invention described in relation to **Figure** 2 can be directly applied also to the (not illustrated) case in which only the second evaporator unit **170(2)** is associated with a corresponding fan **180(2).**

Moreover, the concepts of the present invention described with reference to **Figure 2** can be also applied to the case illustrated in **Figure 1** **-** which comprises two fans -, so that also the flow rate of the compressor unit **140** of the refrigerating appliance **100** can be set according to a weighted average of *D(1)* and *D(2).*

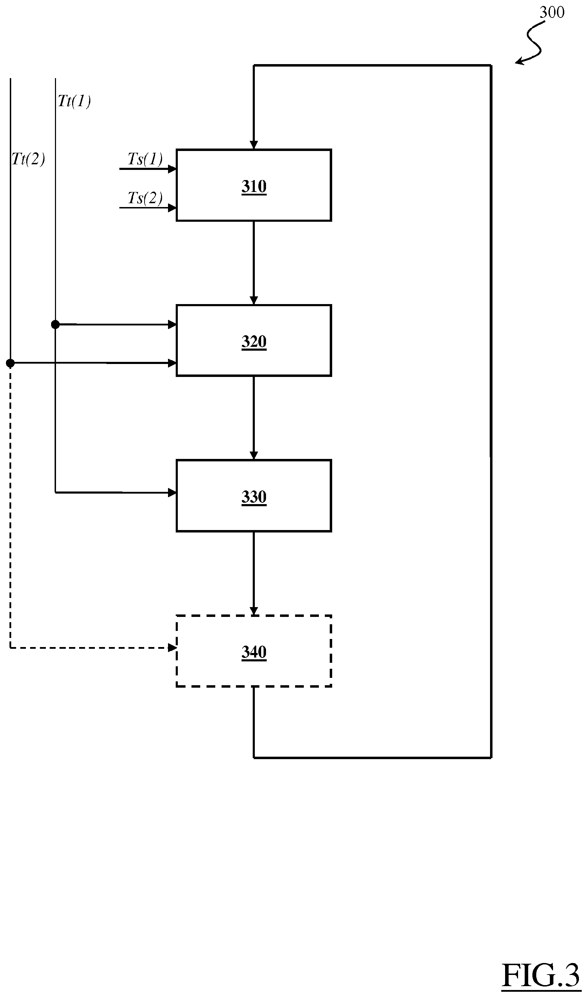

**Figure 3** illustrates a flow chart **300** of the main operations carried out by the control unit **172** according to embodiments of the present invention during the operation of the refrigerating appliance.

According to a preferred embodiment of the present invention, the control unit **172** collects from the first temperature sensor **175(1)** a first sensed temperature *Ts(1)* value indicative of the actual temperature inside the first storage compartment **110(1),** and collects from the second temperature sensor **175(2)** a second sensed temperature *Ts(2)* value indicative of the actual temperature inside the second storage compartment **110(2)** (block **310).**

Then, according to a preferred embodiment of the present invention, the control unit **172** calcualtes a first difference *D(1) = Ts(1) - Tt(1)* between the first sensed temperature *Ts(1)* and a first target temperature *Tt(1)* (for example received through the user interface **174**), calculates a second difference *D(2) = Ts(2) - Tt(2)* between the second sensed temperature *Ts(2)* and a second target temperature *Tt(2)* (for example received through the user interface **174),** calculates a weighted average A of *D(1)* and *D(2)* (for example, the average A may correspond to *(W(1)D(1)+W(2)D(2))*/*(W(1)+W(2)), W(1)>W(2)* in the case of the embodiment illustrated in **Figure 2****),** and accordingly sets a flow rate of the compressor unit **140** according to said average A (block **320).**

At this point, according to a preferred embodiment of the present invention, the control unit **172** sets the flow rate of the first fan **180(1)** according to the first difference *D(1) = Ts(1) - Tt(1)* (block **330).**

Then, if the second fan **180(2)** is present, according to a preferred embodiment of the present invention, the the control unit **172** sets the flow rate of the second fan **180(2)** according to the second difference *D(2) = Ts(2) - Tt(2)* (block **340).**

At this point, the flow chart returns to block **310,** for collecting new first and second sensed temperature *Ts(1), Ts(2)* values and repeating the operations of blocks **320, 330** and (if possible) **340** using the new sensed temperature *Ts(1), Ts(2)* values.

Naturally, in order to satisfy local and specific requirements, a person skilled in the art may apply to the invention described above many logical and/or physical modifications and alterations. More specifically, although the invention has been described with a certain degree of particularity with reference to preferred embodiments thereof, it should be understood that various omissions, substitutions and changes in the form and details as well as other embodiments are possible. In particular, different embodiments of the invention may even be practiced without the specific details (such as the numeric examples) set forth in the preceding description for providing a more thorough understanding thereof; on the contrary, well known features may have been omitted or simplified in order not to obscure the description with unnecessary particulars.

For example, although in the embodiments of the invention herein described the refrigerating appliance comprises two storage compartments, the concepts of the present invention can be directly applied in case more than two storage compartments are provided.

Moreover, similar considerations apply in case the refrigeration circuit is provided with more than one condenser unit.

## Claims

1. A refrigerating appliance (100) comprising:
- a first storage compartment (110(1)) and a second storage compartment (110(2)), the first and second storage compartments being separated from each other;
- a refrigeration circuit comprising a first evaporator (170(1)) associated to the first storage compartment, a second evaporator (170(2)) associated to the second storage compartment, a condenser unit (150), a fluid expansion unit (160) and a compressor (140) for causing refrigerant to flow in the refrigeration circuit in sequence through the condenser unit, the fluid expansion unit, the first evaporator and the second evaporator, before reaching again the compressor, the first evaporator, the second evaporator and the compressor being fluidly connected in series;
- temperature sensors (175(1), 175(2)) adapted to sense a first temperature (Ts(1)) indicative of the temperature inside the first storage compartment and a second temperature (Ts(2)) indicative of the temperature inside the second storage compartment **characterized by**;
- a control unit (172) configured to set a flow rate of the compressor according to a weighted average of both:
- a first difference (D(1)) between the sensed first temperature (Ts(1)) and a first storage compartment target temperature (Tt(1)), and
- a second difference (D(2)) between the sensed second temperature (Ts(2)) and a second storage compartment target temperature (Tt(2)).

2. The refrigerating appliance of claim 1, wherein the control unit is configured to:
- when the weighted average of said first difference and said second difference is higher than zero, increase the flow rate of the compressor, and
- when the weighted average of said first difference and said second difference is lower than zero, decrease the flow rate of the compressor.

3. The refrigerating appliance of any of previous claims, wherein at least one evaporator between the first evaporator and the second evaporator is associated with a corresponding fan (180(1), 180(2)) configured to promote heat exchange between said at least one evaporator and the storage compartment associated to said at least one evaporator.

4. The refrigerating appliance of claim 3, wherein the control unit is configured to set a flow rate of said fan according to a difference between:
- said sensed temperature of the storage compartment associated with the evaporator which is in turn associated with said fan, and
- said target temperature of said storage compartment associated with the evaporator which is in turn associated with said fan.

5. The refrigerating appliance of any preceding claims, wherein:
- the first evaporator is associated with a corresponding first fan configured to promote heat exchange between said first evaporator and the first storage compartment, and
- the second evaporator is associated with a corresponding second fan configured to promote heat exchange between said second evaporator and the second storage compartment, wherein:
- the control unit is configured to set a flow rate of said first fan according to said first difference, and
- the control unit is configured to set a flow rate of said second fan according to said second difference .

6. The refrigerating appliance of claim 4 or claim 5, wherein the control unit is configured to:
- when the first difference is higher than zero, increase the flow rate of the first fan;
- when the first difference is lower than zero, decrease the flow rate of the first fan,
and/or:
- when the second difference is higher than zero, increase the flow rate of the second fan, and
- when the second difference is lower than zero, decrease the flow rate of the second fan.

7. The refrigerating appliance of any of the preceding claims, wherein:
- the first evaporator is associated with a corresponding first fan configured to promote heat exchange between said first evaporator and the first storage compartment, and
- no fan is associated with the second evaporator, wherein:
- the control unit is configured to set the flow rate of the compressor according to a weighted average of said first difference and said second difference, with said first difference that has a lower weight compared to a weight of said second difference.

8. The refrigerating appliance of claim 7, wherein the control unit is configured to set a flow rate of said first fan according to said first difference.

9. The refrigerating appliance of claim 7 or 8, wherein the control unit is configured to:
- when the weighted average of said first difference and said second difference is higher than zero, increase the flow rate of the compressor, and
- when the weighted average of said first difference and said second difference is lower than zero, decrease the flow rate of the compressor.

10. The refrigerating appliance of claim 7, 8 or 9, wherein the control unit is configured to:
- when the first difference is higher than zero, increase the flow rate of the first fan;
- when the first difference is lower than zero, decrease the flow rate of the first fan.

11. The refrigerating appliance of any of the preceding claims, wherein the refrigeration circuit is arranged to have the first evaporator upstream the second evaporator along a flow direction of the refrigerant in said refrigeration circuit.

12. The refrigerating appliance of any of the preceding claims, wherein the compressor is a variable speed compressor, the control unit being configured to set the flow rate of the compressor by setting the speed of the compressor.

13. The refrigerating appliance of any of the preceding claims, wherein the control unit is configured to set the flow rate of the compressor by setting the duty cycle of the compressor.

14. A method for operating a refrigerating appliance comprising:
- a first storage compartment and a second storage compartment, the first and second storage compartments being separated from each other;
- a refrigeration circuit comprising a first evaporator associated to the first storage compartment, a second evaporator associated to the second storage compartment, a condenser unit, a fluid expansion unit, and a compressor for causing refrigerant to flow in the refrigeration circuit in sequence through the condenser unit, the fluid expansion unit, the first evaporator and the second evaporator, before reaching again the compressor, the first evaporator, the second evaporator and the compressor being fluidly connected in series, the method comprising;
- sensing a first temperature (Ts(1)) indicative of the temperature inside the first storage compartment and a second temperature (Ts(2)) indicative of the temperature inside the second storage compartment; and
- setting a flow rate of the compressor according to a weighted average of both:
- a first difference (D(1)) between the sensed first temperature and a first storage compartment target temperature (Tt(1)), and
- a second difference (D(2)) between the sensed second temperature and a second storage compartment target temperature (Tt(2)).

## Patentansprüche

1. Kühlgerät (100), umfassend:
- ein erstes Aufbewahrungsfach (110(1)) und ein zweites Aufbewahrungsfach (110(2)), wobei das erste und das zweite Aufbewahrungsfach voneinander getrennt sind;
- einen Kühlkreislauf, der einen ersten Verdampfer (170(1)), der mit dem ersten Aufbewahrungsfach assoziiert ist, einen zweiten Verdampfer (170(2)), der mit dem zweiten Aufbewahrungsfach assoziiert ist, eine Kondensatoreinheit (150), eine Fluidausdehnungseinheit (160) und einen Kompressor (140) umfasst, um zu bewirken, dass Kühlmittel in dem Kühlkreislauf nacheinander durch die Kondensatoreinheit, die Fluidausdehnungseinheit, den ersten Verdampfer und den zweiten Verdampfer strömt, bevor es wieder den Kompressor erreicht, wobei der erste Verdampfer, der zweite Verdampfer und der Kompressor strömungstechnisch in Reihe verbunden sind;
- Temperatursensoren (175(1), 175(2)), die dazu eingerichtet sind, eine erste Temperatur (Ts(1)), die die Temperatur innerhalb des ersten Aufbewahrungsfachs angibt, und eine zweite Temperatur (Ts(2)), die die Temperatur innerhalb des zweiten Aufbewahrungsfachs angibt, zu erfassen, **gekennzeichnet durch**:
- eine Steuereinheit (172), die dazu ausgelegt ist, eine Strömungsrate des Kompressors gemäß einem gewichteten Mittelwert der beiden Folgenden einzustellen:
- einer ersten Differenz (D(1)) zwischen der erfassten ersten Temperatur (Ts(1)) und einer Zieltemperatur (Tt(1)) des ersten Aufbewahrungsfachs und
- einer zweiten Differenz (D(2)) zwischen der erfassten zweiten Temperatur (Ts(2)) und einer Zieltemperatur (Tt(2)) des zweiten Aufbewahrungsfachs.

2. Kühlgerät nach Anspruch 1, wobei die Steuereinheit zu Folgendem ausgelegt ist:
- wenn der gewichtete Mittelwert der ersten Differenz und der zweiten Differenz größer als Null ist, Erhöhen der Strömungsrate des Kompressors, und
- wenn der gewichtete Mittelwert der ersten Differenz und der zweiten Differenz kleiner als Null ist, Verringern der Strömungsrate des Kompressors.

3. Kühlgerät nach einem der vorhergehenden Ansprüche, wobei mindestens ein Verdampfer zwischen dem ersten Verdampfer und dem zweiten Verdampfer mit einem entsprechenden Gebläse (180(1), 180(2)) assoziiert ist, das dazu ausgelegt ist, einen Wärmeaustausch zwischen dem mindestens einen Verdampfer und dem mit dem mindestens einen Verdampfer assoziierten Aufbewahrungsfach zu begünstigen.

4. Kühlgerät nach Anspruch 3, wobei die Steuereinheit dazu ausgelegt ist, eine Strömungsrate des Gebläses gemäß einer Differenz zwischen Folgendem einzustellen:
- der erfassten Temperatur des Aufbewahrungsfachs, das mit dem Verdampfer assoziiert ist, der wiederum mit dem Gebläse assoziiert ist, und
- der Zieltemperatur des Aufbewahrungsfachs, das mit dem Verdampfer assoziiert ist, der wiederum mit dem Gebläse assoziiert ist.

5. Kühlgerät nach einem der vorhergehenden Ansprüche, wobei:
- der erste Verdampfer mit einem entsprechenden ersten Gebläse assoziiert ist, das dazu ausgelegt ist, einen Wärmeaustausch zwischen dem ersten Verdampfer und dem ersten Aufbewahrungsfach zu begünstigen, und
- der zweite Verdampfer mit einem entsprechenden zweiten Gebläse assoziiert ist, das dazu ausgelegt ist, einen Wärmeaustausch zwischen dem zweiten Verdampfer und dem zweiten Aufbewahrungsfach zu begünstigen, wobei:
- die Steuereinheit dazu ausgelegt ist, eine Strömungsrate des ersten Gebläses gemäß der ersten Differenz einzustellen, und
- die Steuereinheit dazu ausgelegt ist, eine Strömungsrate des zweiten Gebläses gemäß der zweiten Differenz einzustellen.

6. Kühlgerät nach Anspruch 4 oder Anspruch 5, wobei die Steuereinheit zu Folgendem ausgelegt ist:
- wenn die erste Differenz größer als Null ist, Erhöhen der Strömungsrate des ersten Gebläses;
- wenn die erste Differenz kleiner als Null ist, Verringern der Strömungsrate des ersten Gebläses,
und/oder:
- wenn die zweite Differenz größer als Null ist, Erhöhen der Strömungsrate des zweiten Gebläses, und
- wenn die zweite Differenz kleiner als Null ist, Verringern der Strömungsrate des zweiten Gebläses.

7. Kühlgerät nach einem der vorhergehenden Ansprüche, wobei:
- der erste Verdampfer mit einem entsprechenden ersten Gebläse assoziiert ist, das dazu ausgelegt ist, einen Wärmeaustausch zwischen dem ersten Verdampfer und dem ersten Aufbewahrungsfach zu begünstigen, und
- kein Gebläse mit dem zweiten Verdampfer assoziiert ist, wobei:
- die Steuereinheit dazu ausgelegt ist, die Strömungsrate des Kompressors gemäß einem gewichteten Mittelwert der ersten Differenz und der zweiten Differenz einzustellen, wobei die erste Differenz eine geringere Gewichtung im Vergleich zu einer Gewichtung der zweiten Differenz aufweist.

8. Kühlgerät nach Anspruch 7, wobei die Steuereinheit dazu ausgelegt ist, eine Strömungsrate des ersten Gebläses gemäß der ersten Differenz einzustellen.

9. Kühlgerät nach Anspruch 7 oder 8, wobei die Steuereinheit zu Folgendem ausgelegt ist:
- wenn der gewichtete Mittelwert der ersten Differenz und der zweiten Differenz größer als Null ist, Erhöhen der Strömungsrate des Kompressors, und
- wenn der gewichtete Mittelwert der ersten Differenz und der zweiten Differenz kleiner als Null ist, Verringern der Strömungsrate des Kompressors.

10. Kühlgerät nach Anspruch 7, 8 oder 9, wobei die Steuereinheit zu Folgendem ausgelegt ist:
- wenn die erste Differenz größer als Null ist, Erhöhen der Strömungsrate des ersten Gebläses;
- wenn die erste Differenz kleiner als Null ist, Verringern der Strömungsrate des ersten Gebläses.

11. Kühlgerät nach einem der vorhergehenden Ansprüche, wobei der Kühlkreislauf so angeordnet ist, dass der erste Verdampfer entlang einer Strömungsrichtung des Kühlmittels in dem Kühlkreislauf stromaufwärts des zweiten Verdampfers angeordnet ist.

12. Kühlgerät nach einem der vorhergehenden Ansprüche, wobei der Kompressor ein Kompressor mit variabler Drehzahl ist, wobei die Steuereinheit dazu ausgelegt ist, die Strömungsrate des Kompressors durch Einstellen der Drehzahl des Kompressors einzustellen.

13. Kühlgerät nach einem der vorhergehenden Ansprüche, wobei die Steuereinheit dazu ausgelegt ist, die Strömungsrate des Kompressors durch Einstellen des Tastverhältnisses des Kompressors einzustellen.

14. Verfahren zum Betreiben eines Kühlgeräts, das Folgendes umfasst:
- ein erstes Aufbewahrungsfach und ein zweites Aufbewahrungsfach, wobei das erste und das zweite Aufbewahrungsfach voneinander getrennt sind;
- einen Kühlkreislauf, der einen ersten Verdampfer, der mit dem ersten Aufbewahrungsfach assoziiert ist, einen zweiten Verdampfer, der mit dem zweiten Aufbewahrungsfach assoziiert ist, eine Kondensatoreinheit, eine Fluidausdehnungseinheit und einen Kompressor umfasst, um zu bewirken, dass Kühlmittel in dem Kühlkreislauf nacheinander durch die Kondensatoreinheit, die Fluidausdehnungseinheit, den ersten Verdampfer und den zweiten Verdampfer strömt, bevor es wieder den Kompressor erreicht, wobei der erste Verdampfer, der zweite Verdampfer und der Kompressor strömungstechnisch in Reihe verbunden sind, wobei das Verfahren Folgendes umfasst;
- Erfassen einer ersten Temperatur (Ts(1)), die die Temperatur innerhalb des ersten Aufbewahrungsfachs angibt, und einer zweiten Temperatur (Ts(2)), die die Temperatur innerhalb des zweiten Aufbewahrungsfachs angibt; und
- Einstellen einer Strömungsrate des Kompressors gemäß einem gewichteten Mittelwert der beiden Folgenden:
- einer ersten Differenz (D(1)) zwischen der erfassten ersten Temperatur und einer Zieltemperatur (Tt(1)) des ersten Aufbewahrungsfachs und
- einer zweiten Differenz (D(2)) zwischen der erfassten zweiten Temperatur und einer Zieltemperatur (Tt(2)) des zweiten Aufbewahrungsfachs.

## Revendications

1. Appareil de réfrigération (100), comprenant :
- un premier compartiment de stockage (110(1)) et un deuxième compartiment de stockage (110(2)), les premier et deuxième compartiments de stockage étant séparés l'un de l'autre ;
- un circuit de réfrigération comprenant un premier évaporateur (170(1)) associé au premier compartiment de stockage, un deuxième évaporateur (170(2)) associé au deuxième compartiment de stockage, une unité de condensation (150), une unité de détente de fluide (160) et un compresseur (140) destiné à faire circuler du fluide frigorigène dans le circuit de réfrigération successivement à travers l'unité de condensation, l'unité de détente de fluide, le premier évaporateur et le deuxième évaporateur, avant qu'il ne revienne au compresseur, le premier évaporateur, le deuxième évaporateur et le compresseur étant reliés fluidiquement en série ;
- des capteurs de température (175(1), 175(2)) adaptés à capter une première température (Ts(1)) indiquant la température à l'intérieur du premier compartiment de stockage et une deuxième température (Ts(2)) indiquant la température à l'intérieur du deuxième compartiment de stockage, **caractérisé par** :
- une unité de commande (172) configurée pour définir un débit du compresseur selon une moyenne pondérée des deux valeurs suivantes :
- une première différence (D(1)) entre la première température captée (Ts(1)) et une température cible de premier compartiment de stockage (Tt(1)), et
- une deuxième différence (D(2)) entre la deuxième température captée (Ts(2)) et une température cible de deuxième compartiment de stockage (Tt(2)).

2. Appareil de réfrigération selon la revendication 1, dans lequel l'unité de commande est configurée pour :
- lorsque la moyenne pondérée de ladite première différence et de ladite deuxième différence est supérieure à zéro, augmenter le débit du compresseur, et
- lorsque la moyenne pondérée de ladite première différence et de ladite deuxième différence est inférieure à zéro, diminuer le débit du compresseur.

3. Appareil de réfrigération selon l'une quelconque des revendications précédentes, dans lequel au moins un évaporateur entre le premier évaporateur et le deuxième évaporateur est associé à un ventilateur (180(1), 180(2)) correspondant configuré pour favoriser l'échange de chaleur entre ledit au moins un évaporateur et le compartiment de stockage associé audit au moins un évaporateur.

4. Appareil de réfrigération selon la revendication 3, dans lequel l'unité de commande est configurée pour définir un débit dudit ventilateur selon une différence entre :
- ladite température captée du compartiment de stockage associé à l'évaporateur qui est à son tour associé audit ventilateur, et
- ladite température cible dudit compartiment de stockage associé à l'évaporateur qui est à son tour associé audit ventilateur.

5. Appareil de réfrigération selon l'une quelconque des revendications précédentes, dans lequel :
- le premier évaporateur est associé à un premier ventilateur correspondant configuré pour favoriser l'échange de chaleur entre ledit premier évaporateur et le premier compartiment de stockage, et
- le deuxième évaporateur est associé à un deuxième ventilateur correspondant configuré pour favoriser l'échange de chaleur entre ledit deuxième évaporateur et le deuxième compartiment de stockage, dans lequel :
- l'unité de commande est configurée pour définir un débit dudit premier ventilateur selon ladite première différence, et
- l'unité de commande est configurée pour définir un débit dudit deuxième ventilateur selon ladite deuxième différence.

6. Appareil de réfrigération selon la revendication 4 ou la revendication 5, dans lequel l'unité de commande est configurée pour :
- lorsque la première différence est supérieure à zéro, augmenter le débit du premier ventilateur ;
- lorsque la première différence est inférieure à zéro, diminuer le débit du premier ventilateur,
et/ou :
- lorsque la deuxième différence est supérieure à zéro, augmenter le débit du deuxième ventilateur, et
- lorsque la deuxième différence est inférieure à zéro, diminuer le débit du deuxième ventilateur.

7. Appareil de réfrigération selon l'une quelconque des revendications précédentes, dans lequel :
- le premier évaporateur est associé à un premier ventilateur correspondant configuré pour favoriser l'échange de chaleur entre ledit premier évaporateur et le premier compartiment de stockage, et
- aucun ventilateur n'est associé au deuxième évaporateur, dans lequel :
- l'unité de commande est configurée pour définir le débit du compresseur selon une moyenne pondérée de ladite première différence et de ladite deuxième différence, ladite première différence ayant un poids moindre qu'un poids de ladite deuxième différence.

8. Appareil de réfrigération selon la revendication 7, dans lequel l'unité de commande est configurée pour définir un débit dudit premier ventilateur selon ladite première différence.

9. Appareil de réfrigération selon la revendication 7 ou 8, dans lequel l'unité de commande est configurée pour :
- lorsque la moyenne pondérée de ladite première différence et de ladite deuxième différence est supérieure à zéro, augmenter le débit du compresseur, et
- lorsque la moyenne pondérée de ladite première différence et de ladite deuxième différence est inférieure à zéro, diminuer le débit du compresseur.

10. Appareil de réfrigération selon la revendication 7, 8 ou 9, dans lequel l'unité de commande est configurée pour :
- lorsque la première différence est supérieure à zéro, augmenter le débit du premier ventilateur ;
- lorsque la première différence est inférieure à zéro, diminuer le débit du premier ventilateur.

11. Appareil de réfrigération selon l'une quelconque des revendications précédentes, dans lequel le circuit de réfrigération est agencé de manière à ce que le premier évaporateur se situe en amont du deuxième évaporateur suivant une direction d'écoulement du fluide frigorigène dans ledit circuit de réfrigération.

12. Appareil de réfrigération selon l'une quelconque des revendications précédentes, dans lequel le compresseur est un compresseur à vitesse variable, l'unité de commande étant configurée pour définir le débit du compresseur en définissant la vitesse du compresseur.

13. Appareil de réfrigération selon l'une quelconque des revendications précédentes, dans lequel l'unité de commande est configurée pour définir le débit du compresseur en définissant le cycle de travail du compresseur.

14. Procédé pour faire fonctionner un appareil de réfrigération comprenant :
- un premier compartiment de stockage et un deuxième compartiment de stockage, les premier et deuxième compartiments de stockage étant séparés l'un de l'autre ;
- un circuit de réfrigération comprenant un premier évaporateur associé au premier compartiment de stockage, un deuxième évaporateur associé au deuxième compartiment de stockage, une unité de condensation, une unité de détente de fluide, et un compresseur destiné à faire circuler du fluide frigorigène dans le circuit de réfrigération successivement à travers l'unité de condensation, l'unité de détente de fluide, le premier évaporateur et le deuxième évaporateur, avant qu'il ne revienne au compresseur, le premier évaporateur, le deuxième évaporateur et le compresseur étant reliés fluidiquement en série, le procédé comprenant :
- la capture d'une première température (Ts(1)) indiquant la température à l'intérieur du premier compartiment de stockage et d'une deuxième température (Ts(2)) indiquant la température à l'intérieur du deuxième compartiment de stockage ; et
- la définition d'un débit du compresseur selon une moyenne pondérée des deux valeurs suivantes :
- une première différence (D(1)) entre la première température captée et une température cible de premier compartiment de stockage (Tt(1)), et
- une deuxième différence (D(2)) entre la deuxième température captée et une température cible de deuxième compartiment de stockage (Tt(2)).
